# EUROPEAN PATENT APPLICATION

(11) **EP 2 098 807 A2**
(43) Date of publication of application: **09.09.2009**
(21) Application number: 09154258.9
(22) Date of filing: 03.03.2009
(51) Int. Cl.: F25B 15/00, F25B 29/00

(54) **Absorption machine**

(30) Priority: 04.03.2008 IT PD20080073
(71) Applicant: SYSTEMA S.p.A, ., 35010 S. Giustina In Colle (IT)
(72) Inventor: Santi, Luciano, 35017 Piombino Dese (PD) (IT)
(74) Representative: Gallo, Luca

(57) **Abstract**

Absorption machine which performs a heating cycle in the winter season and a cooling cycle in the summer season in order to heat or cool, respectively, the carrier fluid of a hydronic plant (100). The machine (1) comprises a heat generator (8) for heating the solution composed of water and lithium bromide by means of a gas burner (9), the power of which can be modulated by a logic control unit (32) and which has a chamber (25) for mixing the gas with the air in a substantially stoichiometric quantity so as to form a comburent mixture to be conveyed under pressure by means of an impeller into a combustion chamber (15). The machine (1) comprises a water/fumes exchanger (18) which intercepts the fumes emitted from the burner (9) and has two water connections, i.e. a delivery connection (19) and a return connection (20), each with a three-way deviator valve (21, 22). The two three-way valves (21, 22) connect the exchanger (18) to the hydronic plant (100), when the machine (1) is operating with a heating cycle, and to the user installation (23), in particular for sanitary use, when the machine (1) is operating with a cooling cycle. The user installation (23) has a closed circuit with, connected along it, a pump (24) able to perform circulation of the water for as long as the temperature difference between the delivery and the return of the exchanger (18) is greater than a predefined value ΔT. The burner (9) is modulated by the control unit (32) also in relation to the temperature of the water output from the water/fumes exchanger (18), which represents the temperature of the fumes needed to maintain condensation thereof.

## Description

### Field of application

The present invention relates to an absorption machine according to the preamble of the independent main claim No. 1.

The machine in question is classifiable within the heat-engineering sector for the production of refrigerating and heating plants and may be advantageously used where there is the need to have cooling and heating power for the air-conditioning of - usually fairly large - spaces in homes, buildings in general such as office buildings, supermarkets, shopping centres or other buildings.

### State of the art

As is known, a refrigerating plant (or a heat pump) of the conventional type allows the transfer of heat from a cold source to a hot source via an operating fluid operating in a thermodynamic vapour-compression cycle which comprises, in sequence, an evaporation stage, a compression stage, a cooling (usually condensation) stage and an expansion stage.

For this purpose, the plant consists of a closed circuit comprising an evaporator, a compressor, a condenser (or a gas cooler for supercritical cycles) and an expansion (throttling) member, which are arranged in series with each other.

The operating fluid absorbs heat from the cold source (environment to be cooled), being converted into the vapour state in the evaporator. The operating fluid is then brought to a pressure level higher than that in the compressor, so as release heat to the hot source inside the condenser (or gas cooler), and then returns, finally, into the evaporator under pressure flowing through an expansion member.

Also known are absorption machines which are able to operate both during the winter with a heating cycle and during the summer with a refrigerating cycle.

The thermodynamic refrigerating cycle of the absorption machine conventionally envisages "producing" cold using two fluids which are mixed together, one being a cold-producing fluid acting as a solute, with a higher vapour tension, and the other one having the function of a solvent, with a lower vapour tension lower than the first fluid. The fluids which are most commonly used are: ammonia (solute) - water (solvent): used in particular for refrigerating products (evaporation of the solute occurs below 0° C); and water (solute) - lithium bromide (solvent) used in particular for air-conditioning (evaporation of the solute above 0° C.).

In greater detail, the absorption refrigerating machine comprises, like the conventional, electrically operated, vapour-compression machine, a condenser on the highpressure side and an evaporator on the low-pressure side.

Intake and compression of the operating fluid vapours are performed, however, in a "thermal compressor", consisting of an absorber and a generator.

With the addition of heat drawn from the user cooling circuit, the water is converted into vapour inside the evaporator. The vapour migrates into the absorber, where it is absorbed by the "solvent", namely, for example, a concentrated solution of lithium bromide (a type of salt), while maintaining the low-pressure conditions, and is then conveyed, via a pump, to the generator. As a result of the action of the heat which is generated by a burner, for example of the gas or gas-oil type, or generated by another heat source, the water and lithium bromide solution is heated, causing separation of the water in the form of high-temperature vapour. The vapour compressed inside the generator is superheated and passes into the condenser where it is cooled by the cold water supplied, for example, by an evaporation tower. The water vapour condenses and returns to the evaporator in the form of water able to absorb heat again.

For this purpose, the water is sprayed onto the tubes of the evaporator where, evaporating at a low temperature and low pressure, it extracts heat from the water of the hydronic plant, circulating inside the evaporator tubes.

For example, typically the water of the hydronic plant enters at 14°C and exits at 7°C.

The solvent (lithium bromide or water), after separating from the solute (water or ammonia) vapour, flows again into the absorber in order to start a new absorption cycle.

Much less pumping of the solution (and hence mechanical energy for the cycle) is needed in absorbers than that which would be needed in order to pump the vapour output by the evaporator in a conventional refrigerating cycle of the compression type.

The absorption cycle therefore uses a relatively small quantity of mechanical pumping energy (electric power), owing to the availability of thermal energy.

During the thermodynamic heating cycle the absorption machine conventionally envisages "producing" heat by conveying the vapour produced in the combustion chamber directly to the evaporator tubes inside which the water of the hydronic plant is circulating.

For this purpose, a valve positioned along a connecting pipe for connecting the combustion chamber to the evaporator is opened. This valve is closed during the cooling cycle.

As is known, in view of the increasing cost of energy sources and the problems of environmental pollution, there is an increasing need in the sector in question and in modern-day society in general to limit energy consumption by using a high-efficiency machines as well as energy recovery systems.

In order to improve the useful thermal efficiency (UTE) during the production of chilled water, absorption machines which use double-acting heating cycles have been introduced; in said machines the very hot water vapour produced inside the combustion chamber, separating from the solution, before being condensed, is used to heat and produce the evaporation also of another solution which has been pumped into a second chamber.

The performance of the present-day absorption machines, which use double-acting cycles, is substantially competitive compared to the performance of other technologies, such as electrical compression machines.

The absorption machines also have the advantage that they do not require a large amount of electric power from the supply network, as is instead required by compression machines.

The present double-acting absorption machines have a useful thermal efficiency (UTE), during the refrigeration cycle, which is equal to about 1 and is less than that of a corresponding electrical compression machine which manages to reach an average seasonal UTE of about 3.

Instead, the present-day absorption machines (excluding absorption heat pumps) have during the heating cycle a performance coefficient (PCO) which is comparable to that of a conventional boiler of the non-condensation type, i.e. equal to about 92 to 93%. However, as is known, condensation boilers which achieve performance coefficients of 109% (with respect to the NVC) exist on the market.

The operating principle of condensation boilers consists in cooling the exhaust gases down to the condensation point of the water vapour contained inside them. By means of condensation it is possible to exploit the heat contained in the water vapour of the hot air of the fumes, obtaining water and thermal energy from them. As is known, in fact, the transition from the vapour state to the liquid water state occurs at a constant temperature and with heat being extracted from the saturated vapour.

The higher the pressure, the higher the temperature needed to condense the vapour.
The combination of temperature and pressure needed to condense the vapour is referred to as the "dew point".

Condensation boilers exploit the latent heat of the vapour contained in the fumes, therefore recovering a percentage amount of energy which otherwise would be dispersed by the fumes into the atmosphere.

Generally, in order to condense the vapour of the fumes, condensation boilers make use of the temperature of the return water from the hydronic plant, which is colder than the temperature of the delivery water. The fumes are conveyed into an exchanger/condenser which allows the latent heat of the water vapour to be extracted by means of condensation.

The particular capacity of absorption machines to operate both with a heating cycle and with a cooling cycle has hitherto not been fully exploited for the purposes of energy recovery.

### Disclosure of the invention

In this situation, therefore, the object of the present intention is to overcome the drawbacks of the cited prior art by providing an absorption machine which is able to improve the energy efficiency both during the thermodynamic heating cycle and during the thermodynamic cooling cycle.

A further object of the present invention is to provide an absorption machine which uses a small amount of electrical power.

A further object of the present invention is to provide an absorption machine which is safe and operationally entirely reliable.

### Brief description of the drawings

The technical features of the invention, in accordance with the abovementioned objects, may be clearly determined from the contents of the accompanying claims and the advantages thereof will emerge more clearly from the detailed description which follows, with reference to the accompanying drawings which illustrate a purely exemplary and nonlimiting embodiment thereof, where:
- Figure 1 shows a diagram of the absorption machine according to the present invention during a cooling cycle;
- Figure 2 shows a diagram of the absorption machine according to the present invention during a heating cycle;
- Figure 3 shows a detail of the absorption machine according to the present invention relating to a plate-type exchanger.

### Detailed description

In accordance with the figures of the accompanying drawings, 1 denotes overall the absorption machine according to the present invention.

It operates in a manner per se entirely conventional so as to perform selectively in the cold season and in the hot season a heating cycle and a cooling cycle, respectively, in order to heat or cool, correspondingly, the carrier fluid of a hydronic plant 100, as specified in detail below.

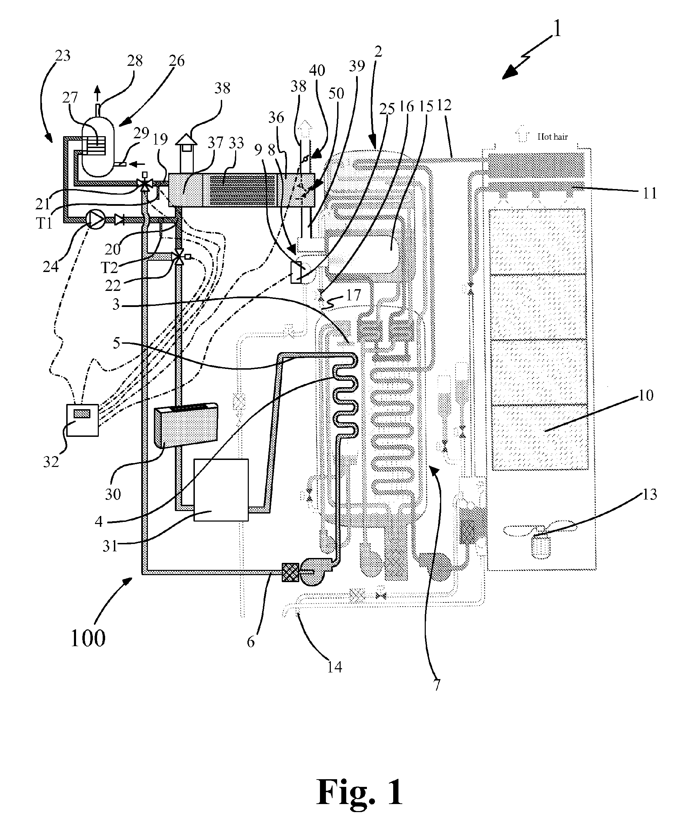

The absorption machine 1 performs the thermodynamic refrigeration cycle, in a manner known per se, within the closed circuit, shown schematically in the accompanying Figure 1, conventionally containing a first heat exchanger 2, which operates at a first pressure level P₁, and acts as a condenser at the sub-critical working pressure of the operating fluid. The latter passing over the exchanger 2 passes from the vapour phase to liquid phase, condensing by means of heat transfer to a cooling fluid of an associated cooling circuit described more fully below.

The condensed operating fluid is then conveyed so as to pass through an expansion member 3, situated downstream of the first heat exchanger 2 and able to undergo isenthalpic flow regulation (throttling) with a pressure drop ΔP₁₋₂ down to a second pressure level P₂. This throttling process is schematically represented in the figures by means of a nozzle capable of spraying the fluid onto a second heat exchanger 4 which operates as an evaporator, situated downstream of the abovementioned expansion member 3 and able to cause re-evaporation of the operating fluid through absorption of heat from a carrier fluid - consisting of water - of the hydronic user cooling plant 100.

The latter may comprise, for example, a plurality of convector or fan convector units for air-conditioning residential environments and is connected to the machine 1 via a delivery pipe 5 and a return pipe 6.

For example, typically it is possible to envisage delivery water at 7°C and return water at 14°C.

A vapour absorber 7 is arranged downstream of the evaporator 4 and inside it the vapour of the operating fluid (for example water vapour) is converted into solution using a solvent, in particular consisting of a concentrated solution of lithium bromide salts, maintaining the pressure conditions P₂.

The absorber 7 produces an endothermic reaction which transfers heat to the cooling circuit before the latter conveys the cooling fluid to the condenser.

The solution is then sent to a generator 8, where by means of a burner, which is for example gas-fuelled, it is heated, causing the separation of water in the form of high temperature vapour which passes into the condenser 2, thus closing the cycle, while the solvent returns into the absorber 7.

The cooling circuit mentioned above is designed to absorb thermal energy first inside the absorber 7 and then in the condenser 2. This thermal energy must be released externally in order to allow the same fluid to repeat the cooling cycle.

This thermal energy to be disposed of is transferred into an evaporation tower 10 joined to and forming one piece with the load-bearing structure of the machine 1, which supports the other components mentioned above. The heat is disposed of by releasing the flow of cooling liquid in the form of a spray from a distributor 11 hydraulically connected to the condenser 2 via a connecting line 12 in a counter-flow arrangement with respect to an air flow generated by a fan 13.

The cooling circuit 14 envisages a replenishing system 14 for the water flow, able to replace that portion which is dispersed in the external environment by means of evaporation.

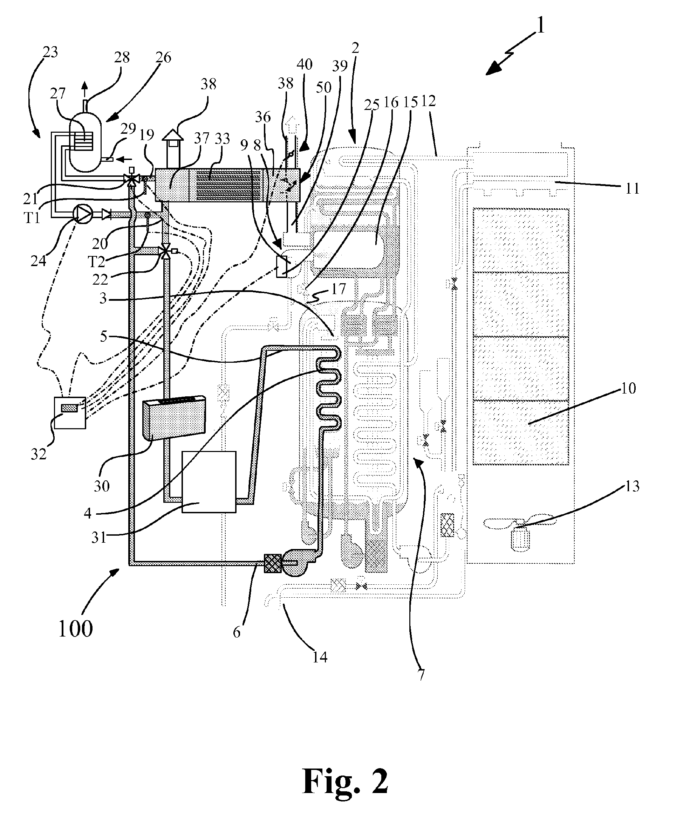

The absorption machine 1 also performs the thermodynamic heating cycle, in a manner known per se, within the closed circuit, as schematically shown in the accompanying Figure 2.

In this case, the vapour produced inside the combustion chamber 15 is sent directly to the tubes of the evaporator 4 inside which the water of the hydronic plant circulates.

For this purpose, a valve 16 positioned along a connecting pipe 17 for connecting the combustion chamber to the evaporator is opened.

According to the underlying idea of the present invention, a water/fumes exchanger 18 is provided so as to intercept the fumes exiting the burner 9 and has two connections for the water, i.e. a delivery connection 19 and a return connection 20, each provided with a three-way deviator valve, denoted by the reference numbers 21, 22, respectively, and intended to connect selectively the exchanger 18 to the hydronic plant 100, when the machine is operating with a heating cycle, and to a user installation 23, in particular for sanitary use, when the machine 1 is operating with a cooling cycle.

The user installation 23 has, connected along it, at least one pump 24 for performing circulation of the water for as long as the temperature difference between the delivery connection 19 and the return connection 20 of the exchanger 18 is greater than a predefined value ΔT.

In order to detect the temperature, two probes T1 and T2 which intercept the flow in the delivery connection 19 and return connection 20 of the exchanger 18 are provided.

The burner 9 used is of the type with a power which can be modulated and is provided with a chamber 25 for mixing the gas with the air in a substantially stoichiometric quantity so as to form a comburent mixture to be conveyed under pressure by means of an impeller into a combustion chamber 15.

Therefore, owing to the choice of the particular burner 9 and the use of a water/fumes exchanger 18, most of the thermal power which would be dispersed into the atmosphere by the exhaust fumes is instead recovered and advantageously used and made available for other applications both in the cooling cycle and in the heating cycle. The transition from one operative configuration to another is performed by operating suitable three-way deviator valves 21, 22 positioned on the two connections, i.e. delivery connection 19 and return connection 20, and able to connect selectively the exchanger to the hydronic plant 100 or to the user installation 23.

The user installation 23 is for example composed of a plant for the production of sanitary water and for this purpose is provided with a boiler 26 for heating the water, which acts as a storage tank for storing the heat absorbed in the water/fumes exchanger 18 during the cooling cycle of the machine 1.

Preferably, the user circuit 23 envisages that the delivery 20 and the return 21 of the exchanger 18 are connected in a closed circuit which exchanges the heat taken from the heat exchanger 18 by means of an additional water/water exchanger 27 inserted inside the boiler 26. The latter is then connected by means of a delivery 28 and a return 29 for example to the sanitary water user network.

Obviously, without thereby departing from the scope of protection of the present invention, the heat drawn from the user circuit 23 may be used for other purposes such as, for example, for heating swimming pools or other applications.

The heat drawn during the summer season is stored in the first tank or boiler 26 and supplements or even replaces the heat normally produced in the boiler usually by an electrical resistance.

Similarly, the hydronic plant 100 intended for air-conditioning or for heating the premises by means of, for example, fan convector units 30 is provided with a second water storage tank 31 acting as a thermal accumulator of energy both for operation of the machine during the cooling cycle and for operation of the machine during the heating cycle.

Advantageously, the burner 9 is, at least partially, of the linear modulation type, i.e. with the impeller able to convey the air/gas mixture with operation at variable revolutions so as to adapt the power supplied by the machine 1 to the actual refrigerating/thermal load requirement of the hydronic plant 100. Furthermore, the modulation is used by the logic of the control unit 32 to keep the fumes always in the condensation condition.

The thermal power consumed is compared by the control unit 32 with the temperature of outlet water from the exchanger 18, which represents the temperature of the fumes. Consequently, in keeping with the thermal load requirements, the operation of the burner 9 is set, modulating it so as to maintain condensation of the fumes and thus allowing maximum energy recovery in the exchanger 18.

Without the modulating burner 8 it would not be possible to keep the fumes in the condensation state.

During the winter season, the modulation of the burner 9 will allow the hydronic plant 100 to be kept at the desired temperature both by means of the heat drawn from the evaporator 4 and by means of the supplementary heat extracted from the fumes of the exchanger 18.

During the summer season, although the machine 1 is intended mainly to satisfy the air-conditioning requirement of the hydronic plant 100, it may be convenient, during an overall calculation of the energy used, to modulate the power of the burner 9 via the logic control unit 32, so as to allow greater recovery of heat by the user installation 23 while keeping the water/fumes exchanger 18 in a constant condensation condition.

The temperature probes T1, T2 during the summer season cause the pump 24 to be switched off when the required water temperature is reached in the user installation 23.

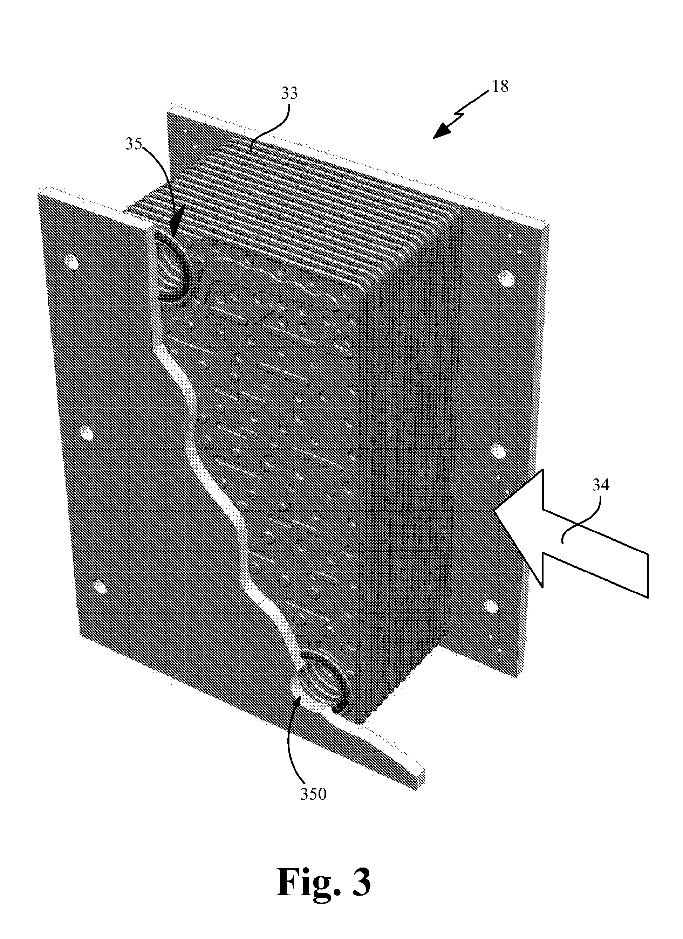

In accordance with a preferred embodiment of the present invention, the water/fumes exchanger 18 is composed of a plurality of stainless steel plates 33 which are arranged side by side and slightly spaced from each other so as to define spaces between their outer surfaces, which are passed over by the flow of combusted fumes indicated by the arrow 34 in Figure 3. Each plate 33 defines a closed box-shaped body formed essentially by two opposite peripherally sealed surfaces, which box-shaped body receives the incoming water from a first common pipe 35 and expels it via a second common pipe 350.

In greater detail, the water/fumes exchanger 18 has a first header 36, which receives the fumes from the combustion chamber 15 at a temperature within the range of 130 to 180°C and directs them toward the plates 33, and a second header 37, which collects the fumes leaving the 33 plates and expels them into the atmosphere directly or via a chimney 38 at a temperature within the range of 30 to 80°C.

The first header 36 also has the function of collecting the condensation water from the fumes of the exchanger 18.

According to an advantageous characteristic feature of the present invention, owing to the use of a burner 9 with the forced introduction under pressure of the mixture into the combustion chamber 15, the fumes pass through the plates 33 of the water/fumes exchanger 18 with a loss of pressure of between 50 Pa and 250 Pa, which favours the heat exchange with the water, increasing the condensation of the vapour contained in the fumes.

The fumes are channelled out of the combustion chamber 15 inside a discharge duct 39 having, connected along it, the water/fumes exchanger 18 and a two-way butterfly valve 40, in particular mounted on the second header 36 and controlled so as exclude or include said water/fumes exchanger 18. The valve 40 has principally the purpose of ensuring that, should there be no absorption of thermal load by the water/fumes exchanger 18 (for example, no sanitary water is drawn from the boiler 26), it opens so that the fumes are expelled directly outside without passing through the plates 33 of the exchanger 18 itself. In this way, hazardous overheating both of the exchanger 18 and of the entire user circuit 23 (boiler 26 and whatever else connected) is prevented.

In accordance with a variation of embodiment illustrated in broken lines in the accompanying Figures 1 and 2, instead of the two-way valve 40, a three-way valve 50 which can be modulated is mounted inside the first header 36. Said valve is able to regulate the flow of fumes from the combustion chamber 15 between the water/fumes exchanger 18 and the chimney 38. For this purpose, it is controlled by the logic control unit 32 so as to supply to the water/fumes exchanger the thermal load required, which, in particular during operation of the machine 1 with a cooling cycle, may be limited to solely replenishing the thermal power used by the user cycle 23.

The logic control unit 32 is provided with a display interface for viewing and entering the operating parameters of the burner and several electronic boards with microprocessors used to control and modulate the combustion power, connect electrical loads and connect the boards together.

The combustion is maintained with emission values which lie well within the maximum values permitted by the specific European directives, in any operating condition.

The benefits of thermal energy recovery are realized both during the winter season, when the machine 1 works in heating mode (production of hot water), with an increase of the performance coefficient, and during the summer period (with the machine producing chilled water) with an increase in the useful thermal efficiency (UTE).

In other words, the hot water produced by the heat exchanger 18 with plates 33 during the winter is used as a thermal energy supplement in the heating plant 100 itself.

During the summer season instead, when the machine 1 works to produce chilled water for the plant 100, the hot water produced by the heat exchanger 18 with plates 33 is used to produce hot water for sanitary use. During the summer season there is therefore simultaneous production of chilled water for air-conditioning purposes and hot sanitary water.

The logic control unit 32 is programmed to optimize the efficiency of the machine according to the operating conditions which take into account not only the thermal load required but also the heat exchange of the exchanger 18, namely the condensation condition of the fumes.

Considering the overall energy requirement of the plant as a whole, including also the hydronic circuit 100 and the user circuit 23, with the machine according to the present invention significant energy savings are achieved since the heat of the exhaust fumes is no longer lost, but is to a large extent utilized.

The invention thus conceived therefore achieves the predefined objects.

Obviously, it may assume, during its practical realization, also forms and configurations different from that illustrated above, without thereby departing from the present scope of protection.

Moreover, all the details may be replaced by technically equivalent elements and the dimensions, the forms and the materials used may be of any nature according to requirements.

## Claims

1. Absorption machine which performs selectively a heating cycle and a cooling cycle in order to heat or cool, respectively, the carrier fluid of a hydronic plant by means of an exchanger; said machine comprising a heat generator for heating said solution by means of a gas burner;
**characterized in that** the power of said burner can be modulated by a logic control unit; and **characterized in that** it comprises a water/fumes exchanger which intercepts the fumes emitted from said burner 9 and has two connections for the water, i.e. a delivery connection and a return connection, each provided with a three-way deviator valve for connecting selectively said exchanger:
- to said hydronic plant, when said machine is operating with a heating cycle;
- and to a user installation, in particular for sanitary use, when said machine is operating with a cooling cycle, which user installation has, connected within it, at least one circulation pump able to perform circulation of the water in said user installation for as long as the temperature difference between the delivery and the return of the exchanger is greater than a predefined value ΔT.

2. Absorption machine according to Claim 1, in which said burner is provided with a chamber for mixing the gas with the air in a substantially stoichiometric quantity so as to form a comburent mixture to be conveyed under pressure by means of an impeller into a combustion chamber.

3. Absorption machine according to Claim 1 or 2, in which said burner is modulated by said control unit also in relation to the temperature of the water output from the water/fumes exchanger, which represents the temperature of the fumes needed to maintain condensation thereof.

4. Absorption machine according to Claim 1 or 3, in which said burner is, at least partially, of the linear modulation type so as to adapt the power supplied by the machine to the actual refrigerating/thermal load required by the hydronic plant or user in accordance with a logic programmable in a logic control unit.

5. Absorption machine according to Claim 1, in which said user installation is provided with a first water storage tank for storing the heat absorbed by the water in said fumes/water exchanger during the cooling cycle of said machine.

6. Absorption machine according to Claim 5, in which said storage tank is formed with a boiler for heating the water of said user installation, in particular consisting of an installation for sanitary use.

7. Absorption machine according to Claim 1, in which said hydronic plant is provided with a second water storage tank.

8. Absorption machine according to Claim 1, in which said water/fumes exchanger comprises a plurality of stainless steel plates passed through by the combusted fumes on the outer surface and by the water in chambers inside the plates.

9. Absorption machine according to Claim 7, in which said water/fumes exchanger comprises a first header for receiving the fumes from the combustion chamber at a temperature within the range of 130 to 180°C and directing them towards said plurality of plates, and a second header, acting as a terminal connector, for expelling the fumes directly into the atmosphere directly or via a chimney, at a temperature within the range of 30 to 80°C.

10. Absorption machine according to Claim 9, in which said first header 9 collects the condensation water from the fumes of said exchanger.

11. Absorption machine according to Claim 8, in which said fumes pass through the plates of said water/fumes exchanger with a loss of pressure of between 50 Pa and 250 Pa, so as to favour heat exchange with the water, increasing the condensation of the vapour contained in the fumes.

12. Absorption machine according to Claim 1, in which said fumes are channelled out of said combustion chamber inside a discharge duct having, connected along it, said water/fumes exchanger and a two-way valve, in particular mounted on said first header and controlled so as exclude or include the plates of said water/fumes exchanger during passage of the fumes.

13. Absorption machine according to Claim 1, in which said fumes are channelled out of said combustion chamber inside a discharge duct which terminates in a chimney and which is intercepted by a three-way valve which can be modulated so as to regulate the flow of fumes from said combustion chamber between said water/fumes exchanger and said chimney.

14. Plant for air-conditioning environments which comprises a hydronic circuit and a user installation which are operationally and hydraulically associated with an absorption machine according to any one of the preceding claims.
